Europäisches Patentamt

European Patent Office

Office européen des brevets

(19)

(11) **EP 1 594 266 A1**

(12) **EUROPEAN PATENT APPLICATION**
published in accordance with Art. 158(3) EPC

(43) Date of publication:
09.11.2005 Bulletin 2005/45

(51) Int Cl.7: **H04L 12/56**

(21) Application number: 04712744.4

(86) International application number:
**PCT/JP2004/001906**

(22) Date of filing: 19.02.2004

(87) International publication number:
**WO 2004/075492 (02.09.2004 Gazette 2004/36)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 19.02.2003 JP 2003041132
17.02.2004 JP 2004039430

(71) Applicant: **MATSUSHITA ELECTRIC INDUSTRIAL CO., LTD.**
**Kadoma-shi, Osaka 571-8501 (JP)**

(72) Inventors:
• **MATSUMOTO, Taisuke**
**Yokohama-shi, Kanagawa 220-0004 (JP)**

• **IKEDA, Shinkichi**
**Yokohama-shi, Kanagawa 224-0006 (JP)**
• **KOBAYASHI, Hirokazu**
**Inagi-shi, Tokyo 206-0824 (JP)**
• **KUMAZAWA, Masayuki**
**Yokohama-shi, Kanagawa 224-0021 (JP)**
• **FUNABIKI, Makoto**
**Yokohama-shi, Kanagawa 230-0001 (JP)**
• **KAWAHARA, Toyoki**
**Chofu-shi, Tokyo 182-0007 (JP)**

(74) Representative:
**Pautex Schneider, Nicole Véronique et al**
**Novagraaf International SA**
**25, avenue du Pailly**
**1220 Les Avanchets - Geneva (CH)**

(54) **INTER-ROUTER ADJUSTMENT METHOD, ROUTER PRIORITY CALCULATION DEVICE, AND ROUTER DEVICE**

(57)     Physical router devices (21, 22) report router status information to a router priority calculation device (20) via a local network (11). According to the router status information reported, the router priority calculation device (20) calculates priority of each physical router device and reports the priority to the physical router devices (21, 22) via the local network (11). According to the priority reported, the physical router devices (21, 22) decide one master router and a backup router other than this from a plurality of physical router devices. Thus, by utilizing the priority obtained from the router status information on the physical router devices (21, 22), it is possible to automatically and flexibly constitute a virtual router device.

FIG.1

**Description**

TECHNICAL FIELD

The present invention relates to an inter-router adjustment method, router priority calculation device and router device for deciding master and backup routers in a virtual router system having a plurality of physical router devices to operate virtually as one router device.

BACKGROUND ART

There is known a system using a virtual router redundancy protocol (hereinafter, referred to as "VRRP") described in "Virtual Router Redundancy Protocol for IPv6", the Internet <URL: http://www.ietf/internet-drafts/draft-ietf-vrrp-ipv6-spec-03.txt>, to realize a virtual router system on an IP (Internet Protocol) network. This system has a plurality of physical router devices, for communication with external networks, belonged to the same sub-network. This is constituted with a master router for communication between the external network and the sub-network, and a backup router as a stand-by router device to act as an alternative in the event of a trouble occurring in the router device operating as a master router.

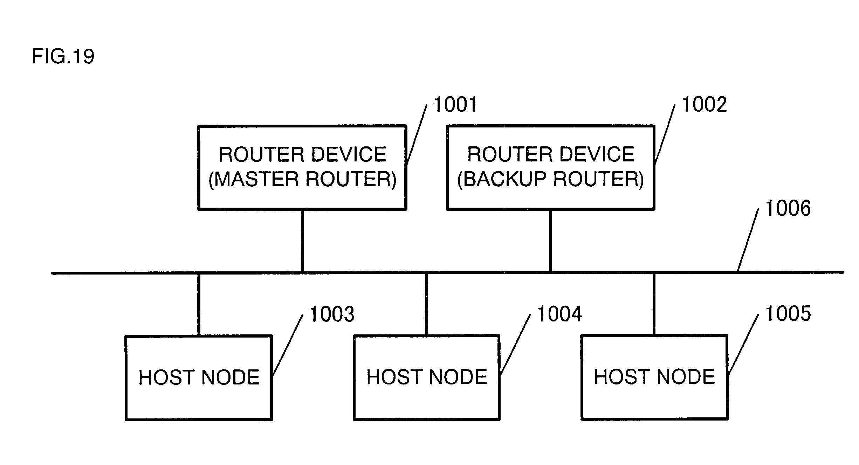

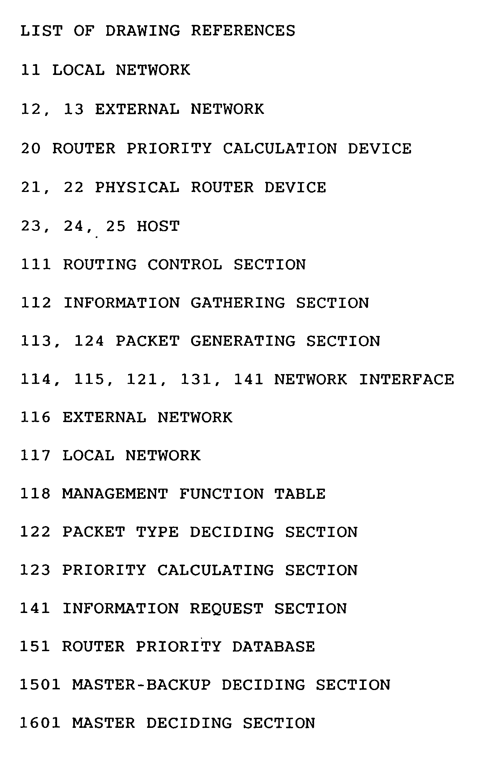

Fig. 19 is a diagram showing a configuration of a conventional system. In Fig. 19, a master router 1001, a backup router 1002, and host nodes 1003 - 1005 are connected to the same sub-network. In this virtual router system, a router group for executing VRRP is to be group-designated by means of a virtual router ID (hereinafter, referred to as a "VRID").

Within the same sub-network, one is taken as a master router out of a group of routers having the same VRID, to actually deliver a packet. In the event that a trouble occurs in the master router, a backup router 1002 switches itself into a master router and delivers a packet. The master router and the backup router indicate virtually the same address (virtual router address) to the nodes. The host nodes transmits a packet with use of a virtual router address as a default router without the consciousness of master and backup routers.

The master router 1001 transmits regularly a VRRP advertisement packet containing a priority for the relevant device that is to become a master router, to the backup router 1002. The backup router 1002, when receiving a VRRP advertisement packet from the master router having a priority higher than the priority of its own in a constant time period (master down-timeout), resets a master down-timeout timer and confirms that the master router 1001 is operating. Meanwhile, the backup router, when receiving a VRRP advertisement packet from the master router 1001 having a priority lower than the priority of its own, discards the VRRP advertisement packet as it is without resetting the master down-timeout timer. The backup router 1002, when the master down-timeout timer expires, decides that a trouble occurred in the master router 1001, thus becoming a master router and transmitting a VRRP advertisement packet to the routers within the same group. Incidentally, the master down-timeout value is set shorter for the higher priority and longer for the lower priority. For this reason, the router device having the highest priority is to become a master router. Therefore, the master router 1001 can be set up in accordance with priority.

Meanwhile, there is disclosed an art that is to exchange mutual-monitoring messages at regular intervals between master and backup routers thereby detecting a trouble earlier and speeding up the switchover process (see JP-A-7-264233, for example).

However, there is a problem, in the VRRP, that the user is required to previously set up a priority for deciding master and backup routers based on a system operating policy.

Meanwhile, there is a problem that the priority once established on each router could not be changed flexibly during operation of the system.

Particularly, when considering that a configuration in which, of a plurality of physical router devices belonging to the same sub-network, a certain physical router device utilizes a cellular telephone network in connection to an external network while the other physical router device uses a local area network, is applied to a mobile network to continue communication even when the sub-network entirety moves, there is a dynamic change in the connection status to the external network in accordance with movement. Thus, there is a need of occasional switchover to a router device in good connection status. Therefore, it is requisite to flexibly change the setting during system operation.

DISCLOSURE OF THE INVENTION

It is an object of the present invention to provide an inter-router adjustment method, router priority calculation device and router device capable of determining priorities of physical router devices for deciding master and backup routers and switching over flexibly the master router in accordance with the determined priorities.

The inter-router adjustment method, router priority calculation device and router device of the invention is adapted for obtaining, by calculation, the priorities of physical router devices that are to constitute master and backup routers from at lest one of pieces of router status information of a line status, a process burden and a battery remaining capacity of the physical router device. By forwarding the obtained priorities onto the network, notification can be made to the physical router devices.

This can automatically set up the priorities of physical router devices and flexibly change the master router during system operation, in a system to constitute master and backup routers by means of a plurality of physical router devices.

An inter-router adjustment method of the invention comprises: an information request step of requesting router status information to all router devices belonging to a same sub-network; a step of acquiring the router status information and calculating priorities for deciding a router device that is to become an operating status based on the router status information so that the plurality of router devices can operate virtually as one router device; and a step of deciding a first router device that is to become an operating status and a second router device to be in a standby status, according to the priorities.

This can provide a function to dynamically constitute master and backup routers by utilization of the priorities determined from router status information of the plurality of physical router devices.

Meanwhile, an inter-router adjustment method of the invention comprises: an information request step of requesting router status information to all router devices belonging to a same sub-network; a step of acquiring the router status information and calculating a priority for deciding a router device that is to become an operating status based on the router status information so that the plurality of router devices can operate virtually as one router device; a step of transmitting the priorities calculated for the router devices respectively to the router devices; and a step of deciding whether a first router device which received the priority becomes an operating status, depending upon the priority of its own and the priority of a second router device received from the second router device being in an operating status.

Due to this, because the plurality of physical router devices are allowed to know their own priorities, dynamic switchover is possible between master and backup routers.

Meanwhile, an inter-router adjustment method of the invention further includes a step of adjusting the priorities between the router devices depending upon a significance of the router status information.

This can provide a function to flexibly adjusting the priority of the physical router device determined from the router status information of a plurality of physical router devices by taking account of the statuses of the other physical routers belonging to the same sub-network, and to dynamically constitute master and backup routers by notifying the priority adjusted.

Meanwhile, in an inter-router adjustment method of the invention, request for the router status information is periodically made in the information request step. This provides a function that, because master and backup routers are to be dynamically constituted by utilization of the priorities determined at a regular interval, efficient system operation is made feasible that is to follow up the dynamically changing physical-router status.

Meanwhile, in an inter-router adjustment method of the invention, request for the router status information is made according to a request from a communication device including the router devices connected to the same sub-network. This provides a function that efficient system operation is made feasible by receiving a notification with detection of master or backup router trouble from another device and re-constituting master and backup routers immediately.

Meanwhile, in an inter-router adjustment method of the invention, calculating the priorities is made when there is a change in the router status information acquired. This makes it possible to grasp the change of router status information about the physical router device. Accordingly, there is provided a function that, by automatically re-constituting master and backup routers by utilization of the determined priority, efficient system operation is made feasible.

Meanwhile, in an inter-router adjustment method of the invention, the router status information is at least any one of a line status, a processing burden and a battery remaining capacity of the router device itself.

Because this can obtain a priority as to the physical router device, there is provided a function that master and backup routers can be dynamically constituted by utilization of the priority determined.

A router priority calculation device of the invention comprises: a router information gathering section for gathering router status information of router devices belonging to a same sub-network; a priority calculating section for calculating priorities deciding a router device that is to become an operating status based on the router status information so that a plurality of router devices can operate virtually as one router device; and a priority notifying section for notifying the priorities calculated respectively for the router devices to the router device.

This provides a function to dynamically constitute master and backup routers by notifying a priority determined from the router status information about a plurality of physical router devices.

A router priority calculation device of the invention comprises: a router information gathering section for gathering router status information of router devices belonging to a same sub-network; a priority calculating section for calculating priorities deciding a router device that is to become an operating status based on the router status information so that a plurality of router devices can operate virtually as one router device; a master deciding section for deciding a first router device that is to become an operating status and a second router device to be in a standby status, according to the priorities; and a master notifying section for notifying information identifying the decided router device to the router device.

Because this can decide unambiguously a router device that is to become a master router and notification is possible to that router device, there is provided a function that master and backup routers can be dynamically configured without encountering a conflict between the router devices.

Meanwhile, the router information gathering section of a router priority calculation device of the invention has a comparing section for comparing the router status information newly acquired with existing router status information, to instruct the priority calculating section to re-calculate a priority when the comparing section detects a difference in the router status information. Due to this, by calculating and notifying a priority only when there is a change from the router status information received earlier, there is provided a function that efficient system operation is made feasible.

Meanwhile, in a router priority calculation device of the invention, the router information gathering section has an information request section for requesting the router status information to the router device.

Because this enables to grasp the status of the physical router device by request of the router priority calculation device, there is provided a function that master and backup routers can be dynamically constituted by notifying the priority determined.

Meanwhile, in a router priority calculation device of the invention, the router information gathering section has a timer, the information request section requesting the router status information when receiving a time-up notification from the timer.

This can notify the priorities determined regularly from the status of the physical router device. By dynamically constituting master and backup routers by utilization of the priorities determined regularly, there is provided a function that efficient system operation is made feasible that is to follow up the physical router status varying dynamically.

Meanwhile, the router information gathering section of a router priority calculation device of the invention further includes an update request receiving section for receiving an update request for the priority from a communication device including the router devices connected to the same sub-network, the update request receiving section, when receiving the update request, making a notification to the information request section whereby the information request section requests the router status information to the router device.

This can receive a notification with a detection of trouble on the virtual router device from another device, request router status information to the router devices and notify the newest priority. By dynamically re-configuring master and backup routers with utilization of the determined priority, there is provided a function to enable efficient system operation.

Meanwhile, a router priority calculation device of the invention, is comprised of: a router information gathering section for gathering router status information of router devices belonging to a same sub-network; a priority calculating section for calculating priorities deciding, from the router status information, a router device that is to become an operating status so that a plurality of router devices can operate virtually as one router device; a master deciding section for deciding a router device that is to become an operating status according to the priorities; and a master notifying section for notifying information identifying the decided router device to the router device.

This can determine and notify a priority depending upon a change in the router status information about the physical router device. By dynamically re-configuring master and backup routers with utilization of the determined priority, there is provided a function to enable efficient system operation.

Meanwhile, a router device of the invention comprises: a status notifying section for forwarding router status information comprising at least any one of a line status, a process burden and a battery remaining capacity; a priority receiving section for receiving a priority deciding a router device that is to become an operating status so that a plurality of router devices belonging to a same sub-network can operate virtually as one router device; and a master deciding section for deciding whether to become an operating status or a standby status, according to the priority received and a priority of the first router device notified from a first router device in an operating status.

This can switch over the router operation depending upon a priority determined from the physical routers connected to the same sub-network, thereby making it possible to dynamically configure master and backup routers. Thus, there is provided a function to enable efficient system operation.

Meanwhile, in a router device of the invention, the status notifying section forwards periodically the router status information onto the sub-network.

This can grasp the status of the physical router device regularly. By dynamically configuring master and backup routers with utilization of the regularly determined priority, there is provided a function to enable efficient system operation.

Meanwhile, in a router device of the invention, there is further included an information request receiving section for receiving a request for the router status information, to forward the router status information onto the sub-network depending upon the request the status notifying section received.

Due to this, by receiving a router status information notification request and notifying the router status information about the device concerned, the status of the physical router device can be grasped. By dynamically configuring master and backup routers with utilization of the determined priority, there is provided a function to enable efficient system operation.

Meanwhile, in a router device of the invention, there is further included a status monitor section for monitoring a change in the router status information, the status monitor section, when detecting a change in the router status information, making a notification to the information notifying section whereby the information notifying section forwards a latestrouter status information onto the sub-network.

This can grasp a change in the router status information about the physical router device. By dynamically configuring master and backup routers with utilization of the determined priority, there is provided a function to enable efficient system operation.

Meanwhile, a local network system of the invention comprises a router device according to the invention, and a router priority calculation device according to the invention.

This can automatically set up priorities of the physical router devices that are to constitute master and backup routers, according to a priority notified by the router priority calculation device. Also, the priority of the physical router device can be flexibly changed during system operation. Communication can be efficiently continued even where there is a dynamic change in the status of physical router device due to movement thereof, e.g. mobile network.

As described above, according to the invention, physical-router-device priority setting can be made automatically and flexibly depending upon a change in the physical router device status.

BRIEF DESCRIPTION OF THE DRAWINGS

Fig. 1 is a network arrangement diagram according to an embodiment of the present invention.
Fig. 2 is a block diagram of a physical router device according to embodiment 1 of the invention.
Fig. 3 is a block diagram of a router priority calculation device according to embodiment 1 of the invention.
Fig. 4 is a block diagram of a router priority calculation device according to embodiment 2 of the invention.
Fig. 5 is a block diagram of a router priority calculation device according to embodiment 3 of the invention.
Fig. 6 is a figure showing one example of router priority database according to embodiment 3 of the invention.
Fig. 7 is a sequence diagram explaining the operation of a network system configured by the embodiment of the invention.
Fig. 8 is a figure showing a format of a router-status information notification message according to embodiment 1 of the invention.
Fig. 9 is a figure showing a format of a router-status information notification request message according to embodiment 2 of the invention.
Fig. 10 is a figure showing a format of a priority notification message according to embodiment 1 of the invention.
Fig. 11A, 11B are flowcharts showing an operation of the router device according to embodiment 1 of the invention.
Fig. 12 is a flowchart showing an operation of the router priority calculation device according to embodiment 1 of the invention.
Fig. 13 is a flowchart showing an operation of the router priority calculation device according to embodiment 2 of the invention.
Fig. 14 is a flowchart showing an operation of the router priority calculation device according to embodiment 3 of the invention.
Fig. 15 is a block diagram of a physical router device according to embodiment 4 of the invention.
Fig. 16 is a block diagram of a router priority calculation device according to an embodiment of the invention.
Fig. 17 is a flowchart showing an operation of a router device according to embodiment 4 of the invention.
Fig. 18 is a flowchart showing an operation of a router priority calculation device according to embodiment 4 of the invention.
Fig. 19 is a network arrangement diagram using the conventional virtual router device.

BEST MODE FOR CARRYING OUT THE INVENTION

Hereunder, embodiments of the present invention will be explained by using the drawings.

(Embodiment 1)

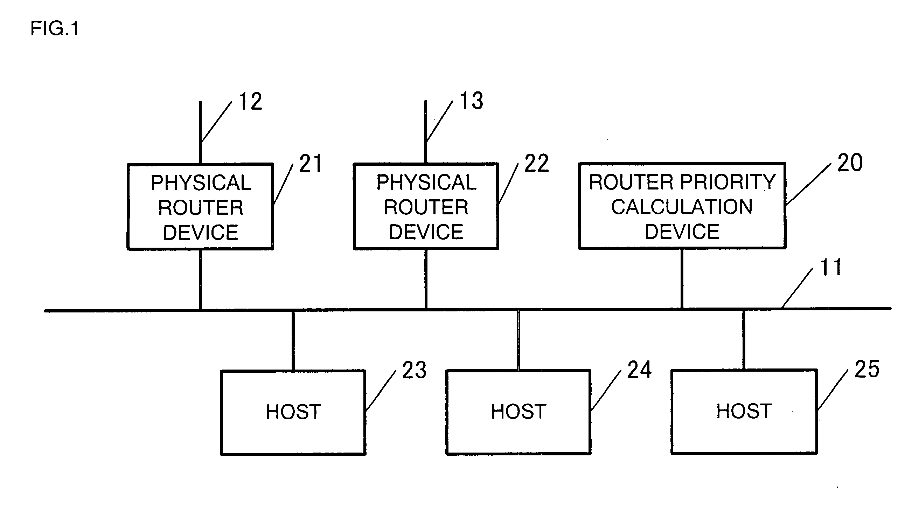

Fig. 1 is an arrangement example of a network system in embodiment 1 of the present invention.
In Fig. 1, a router priority calculation device 20 calculates the priority from router status information about a physical router device. Physical router devices 21, 22 constitute a master router and a backup router, according to the priorites of the physical router devices. Hosts 23, 24, 25 are connected to a local network 11. The physical router device 21 and the physical router device 22 respectively connect between the local network 11 and the external networks 12 and 13. Incidentally, although Fig. 1 shows the case with one router priority calculation device, two physical router devices and three hosts, those are satisfactorily one or more per each.

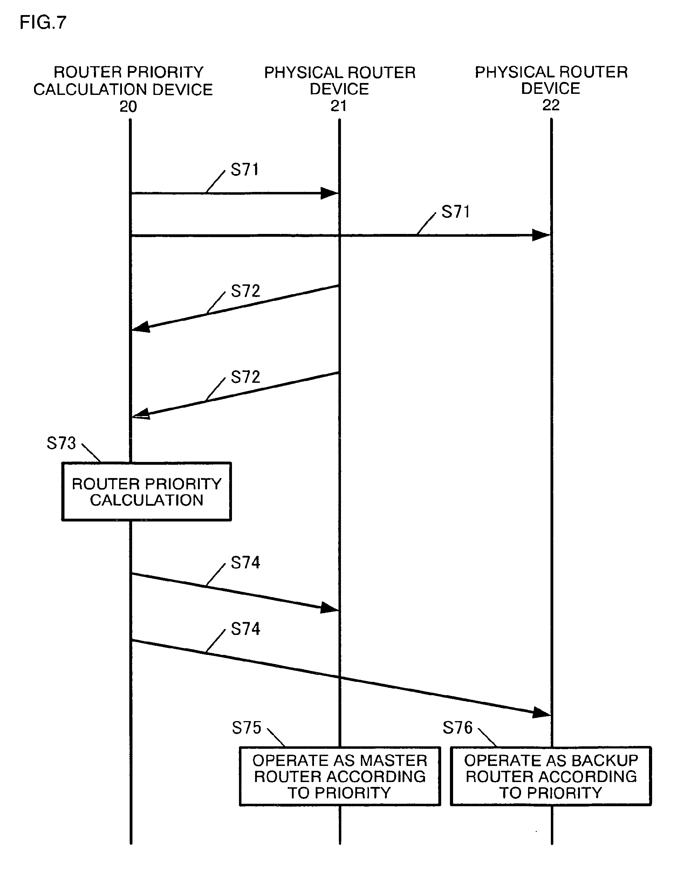

The operation of the network system arranged as above is explained on the basis of a sequence of Fig. 7.

In the network system shown in Fig. 1, the router priority calculation device 20 requests router status information to the physical router device 21, 22 (step S71).

Then, the physical router devices 21 and 22 forward the status information about the physical router 21, 22 to the router priority calculation device 20 through the local network 11 (step S72).

Then, the priority calculation device 20 which received the router status information calculates a priority of the router device depending thereupon (step S73). The router calculation device 20 notifies the obtained priority to the router device 21, 22 through the local network (step S74).

Of the physical router devices 21, 22 notified of priorities, the physical router device which is the highest in priority operates as a master router (step S75) while the other router device operates as a backup router (step S76), in accordance with the priorities notified.

Incidentally, although the present embodiment, at step S71, allows the router priority calculation device 20 to request router status information to the physical router device 21, 22, the physical router device 21, 22 may forward router status information spontaneously.

The operation of the network system arranged as above is explained below on each of its constituent devices.

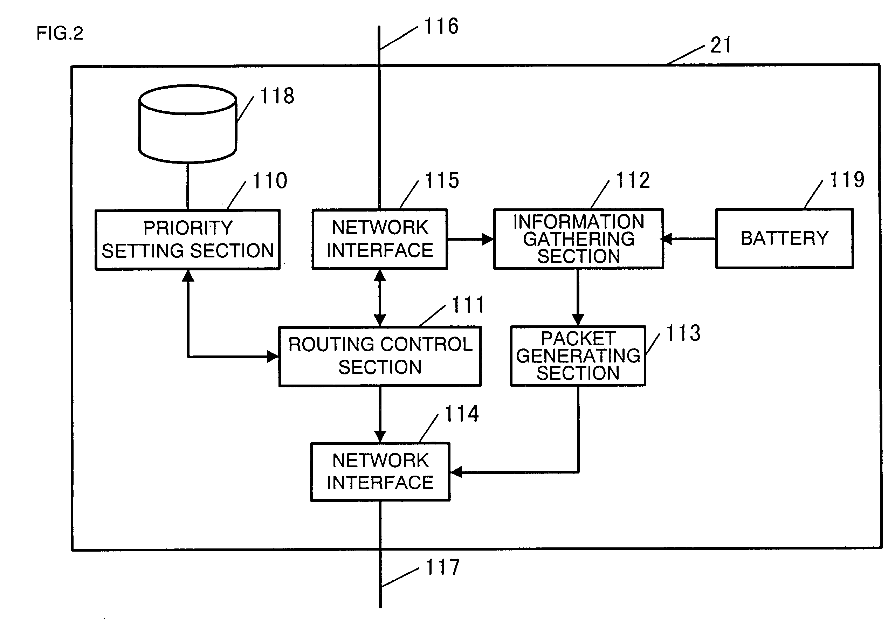

First of all, the physical router 21 or 22 in embodiment 1 is shown as an example of its detailed configuration diagram in Fig. 2, which is explained below. Note that explanations are made as to the physical router device 21, which is true also for the physical router 22.

In Fig. 2, the priority setting section 110 sets a priority in a management function table 118. A routing control section 111 decides the type of a received packet and carry out a packet transfer process operation by making a switchover between a master router and a backup router according to the priority from the priority setting section 110. An information gathering section 112 gathers status information about the physical router itself. A packet generating section generates a packet for transmitting the status information gathered. A local network interface 114 is for connection to the local network 11. An external network interface 115 is for connection to the external network 12 or 13. A physical link 116 and a physical link 117 are connected to an external network interface 115 and the local network interface 114. Incidentally, the priority setting section 110, management function table 118 and routing control section 111 corresponds to a master deciding section. Meanwhile, in Fig. 2, all the general router device constituents except for the constituents featuring the invention are omitted.

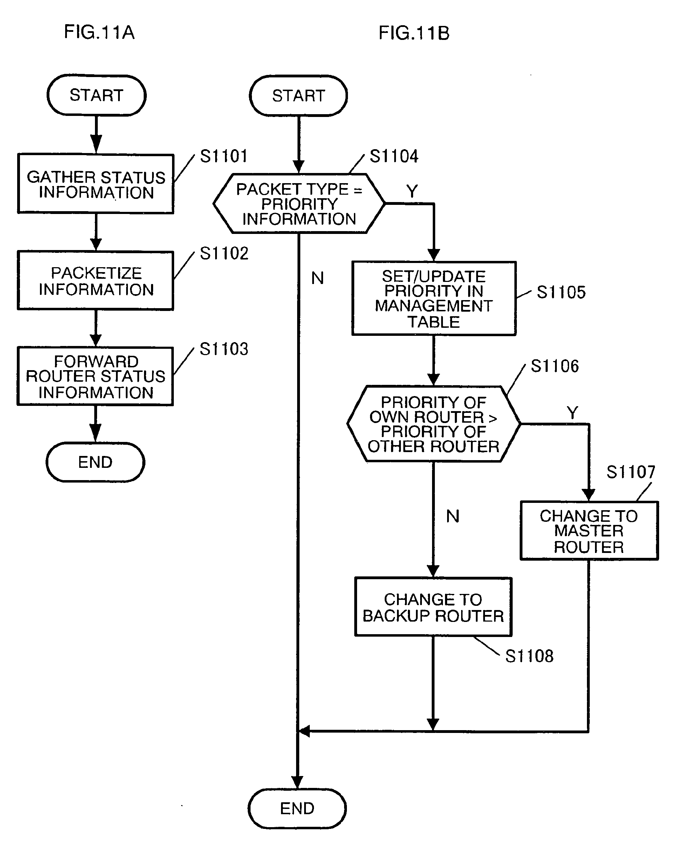

The physical router device 21 configured as above is explained below as to its operation by using Fig. 11A.

In the physical router 21, the information gathering section 112 gathers information about the physical router device (step S1101). The information to be gathered assumably includes line status, line information, etc. of the physical link 117, battery remaining capacity status of the physical router device 21 provided that the physical router 21 is a portable device, the current process burden on the physical router 21, and so on. The circuit status includes connection status to an external network, transmission speed, error condition and congestion degree. Circuit information refers to billing information, e.g. fee charge per 1-bite transfer, security and the like. Incidentally, the information noted above is mere one example. It is possible to gather information other than the above in order for use in priority calculation.

Then, the packet generating section 113 packetizes the respective pieces of information gathered by the information gathering section 112, in order to notify those to the priority calculation device 20 (step S1102). Incidentally, the packet used here can be considered a packet as in the second layer or third layer of the OSI reference model.

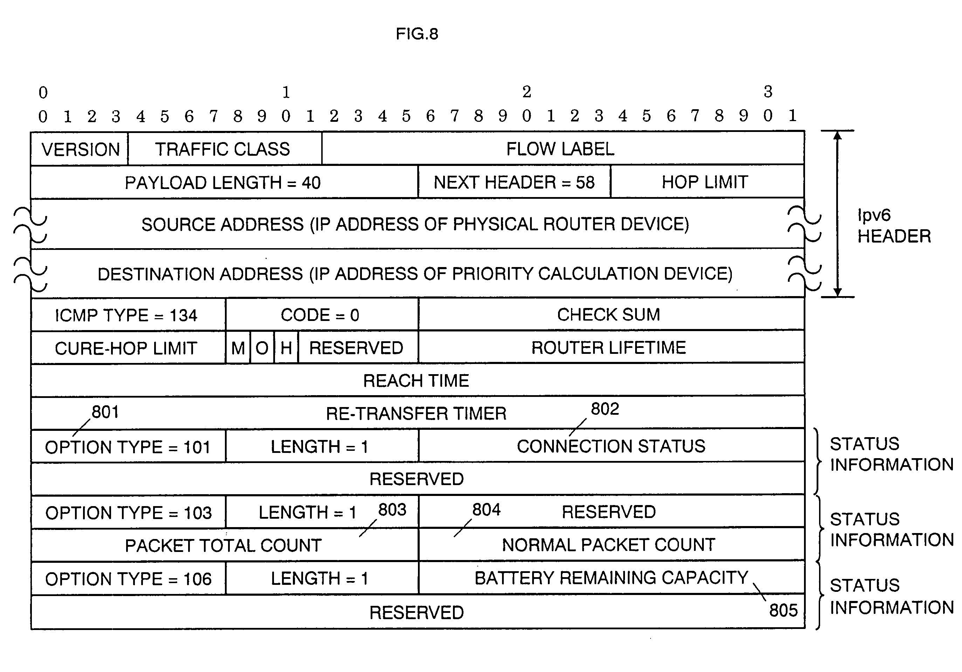

Then, the network interface 114 forwards the packet generated by the packet generating section 113, onto the local network 11 (step S1103). There is shown in Fig. 8 a format of a message for use in the transmission. The message is an extension of a router advertise message, which is added with status information 810, 811, 812.

In Fig. 8, option type 801 represents the type of status information. The option type 801, at "101", represents a connection status to the exterior network, at "103", represents an error status and, at "106", shows the information of a battery remaining capacity. Incidentally, connection status is defined "1" for link-connection status and "0" for link-disconnection status. Error condition is defined by a normalization with a division of normal packet count by all the packet count. Battery remaining capacity is normalized "0" for an available time of 1 hour or less and "1" for an available time of 10 hours or more, wherein "0.2" indicates a battery remaining capacity of 2 hours or less.

Besides the above, congestion degree is represented in a time communication is actually done on a unit-time-averaged basis. Process load is normalized as a division of transfer packet count per unit time by the maximum transferable packet count. The normalization process of status information is not limited to the above but is satisfactorily defined so as not to cause incorrectness between the router devices. Incidentally, transmission is by selecting a router having its own status and allowed for communication.

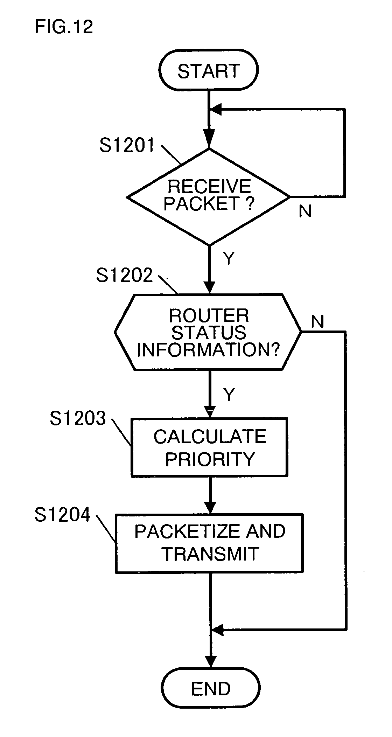

In the above process of from a gathering of to a transmission of information as to the status of the physical router device 21, 22, router status information is forwarded regularly or at a constant time interval. Otherwise, router status information is forwarded when receiving a transmission request for status information from the priority calculation device 20 or other device connected to the local network 11. Meanwhile, although not shown in Fig. 12, monitor means can be provided to monitor the change of router status of the physical router device 21 and 22 (e.g. disconnection at the physical link 116, battery remaining capacity decrease at the physical router device 21 or 22), to output router status information upon a change of router status.

Using Fig. 11B, explanation is now made below on the operation that the physical router device 21, 22 receives priority information from the router priority calculation device 20.

When the network interface 114 receives a packet from the local network 11, packet type is first decided at the routing control section 111 (step S1104).

Then, when the received packet is decided to be a packet notifying the priority of physical router 21 or 22, the routing control section 111 reports it to the priority setting section 110. The priority setting section 110 set/update, in the management function table 118, a priority notified by the packet that the priority of physical router device 21 or 22 has been received from the routing control section 111 (step S1105).

Then, the priority setting section 110 compares the priority of the relevant device with a priority of the other device depending upon the set/updated priority of from the management function table 118, and outputs, to the routing control section 111, an instruction for a switchover as a master router when the priority of the relevant device is the higher (step S1106) or as a backup router when the priority of the relevant device is the lower. Thus, the routing control section 111 makes a switchover operation (step S1107).

In the case of operation as a master router, packet transfer process is carried out as the usual router function shown in the following. In the case of a backup router, the transfer process is not made.

The packet transfer process is explained for the case of operation as a master router. The routing control section 111, when deciding that the packet the network interface 114 received from the local network 11 is a packet to be transferred onto the external network 12, forwards the relevant packet from the network interface 115 to the external network 12.

Meanwhile, the routing control section 111, when deciding that the packet the network interface 115 received from the local network 12 is a packet to be transferred onto the external network 11, forwards the relevant packet from the network interface 114 onto the local network 11.

Explanation is now made on the router priority calculation device 20.

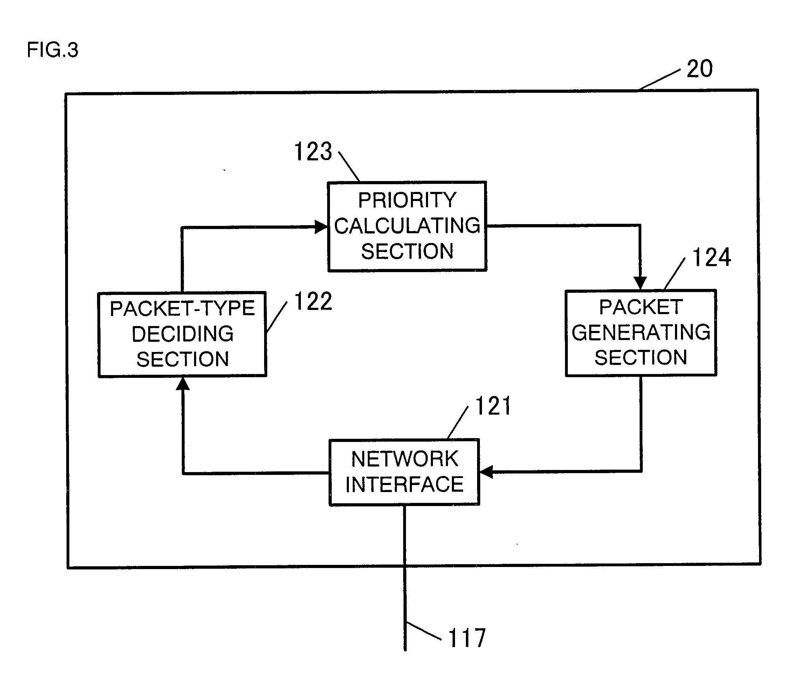

Fig. 3 is an example of detailed configuration diagram of the router priority calculation device 20 in the present embodiment 1. In Fig. 3, a network interface 121 is for connection to the local network 11. A packet-type deciding section 122 is to decide as to whether or not a received packet concerns router status information, or so. A priority calculating section 123 calculates a priority of physical router device from the various pieces of received information about physical router. A packet generating section 124 generates a packet for notifying the priority obtained.

Using Fig. 12, explanation is made below on the operation of the router priority calculation device 20 configured as above.

At first, the router priority calculation device 20, when receiving a packet from the network interface 121 (step S1201), decides a packet type at the packet-type deciding section 122 (step S1202).

Then, when the packet-type deciding section 122 decides the received packet as router-status information concerning the status of the physical router device 21 or 22, the priority calculating section 123 calculates a priority of the physical router 21 or 22, or transmission source of the information, depending upon the foregoing information (step S1203). How to calculate a priority, in concrete, is referred later.

Then, the packet generating section 124 packetizes the calculated priority in order to notify the physical router 21 or 22 thereof. Incidentally, the packet used here is a packet as in the second or third layer of the OSI reference model.

Then, the network interface 121 forwards the packet generated by the packet generating section 124, onto the local network 11 (step S1204).

Here, one example is shown as to how to calculate a priority in the priority calculating section 123.

In the router device 21 or 22, provided that the status (0: link disconnected, 1: link connected) of the physical link 116, physical-link error rate (0: high error rate to 1: low error rate) and battery remaining capacity (0: insufficient remaining capacity to 1: sufficient remaining capacity) are taken as pieces of information for use in priority calculation, then the priority Pr is calculated by (Equation 1) given in the following.

$$Pr = A \times (status) + B (error\ rate) + C \times (battery\ remaining\ capacity) \quad (1)$$

Incidentally, A, B and C are constants given as A + B + C = 255 and assumed as weights on the foregoing information in priority calculation. Namely, provided that A = 128, B = 82 and C = 45, significance is given the most to the physical link status in calculating a priority Pr while significance is given the least to the battery remaining capacity. Incidentally, although (Equation 1) calculates a priority from three pieces of information, the information for use in the priority calculation is not limited to these three information but may be used more other information, e.g. physical router device process burden, connected line band, congestion degree, etc.

Meanwhile, although router priority is calculated within the range of 0 - 255 in (Equation 1), the range of priority can be set up desirably.

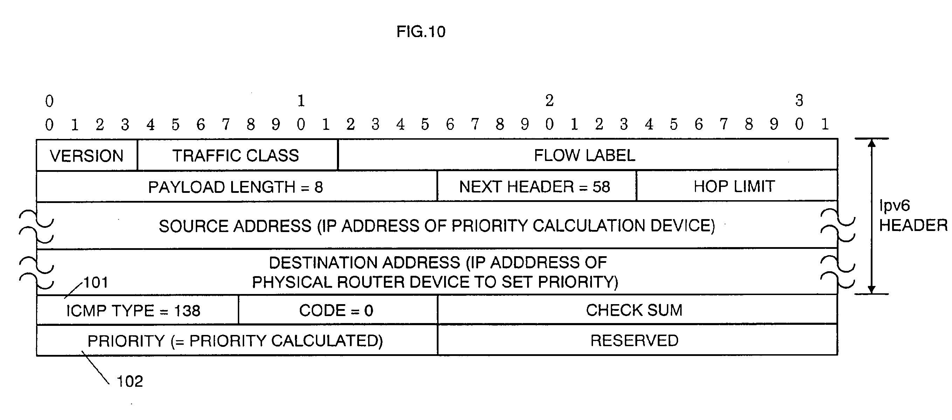

There is shown in Fig. 10 a format of a message for use in transmitting a report of the router priority information. In this message, "138" is newly defined in the ICMP type in order to show the relevant message. Meanwhile, a calculated priority is described in the priority field 1002.

Incidentally, in the present embodiment, although the router priority calculating device 20 was explained as an independent device connected to the local network 11, it can be built in the physical router 21, 22 and further in the host 23 - 25.

From the above, according to the present embodiment, in a local network connected, by transmission mediums, with at least one host, at least one physical router device and at least one router priority calculation device, the router priority calculation device automatically calculates priorities of physical router devices from the router status information about physical router devices and reports those to the physical router devices. Accordingly, the physical router device is allowed to perform a switchover automatically and flexibly between operating status (master router status) and standby status (backup router status) by utilization of a priority reported.

(Embodiment 2)

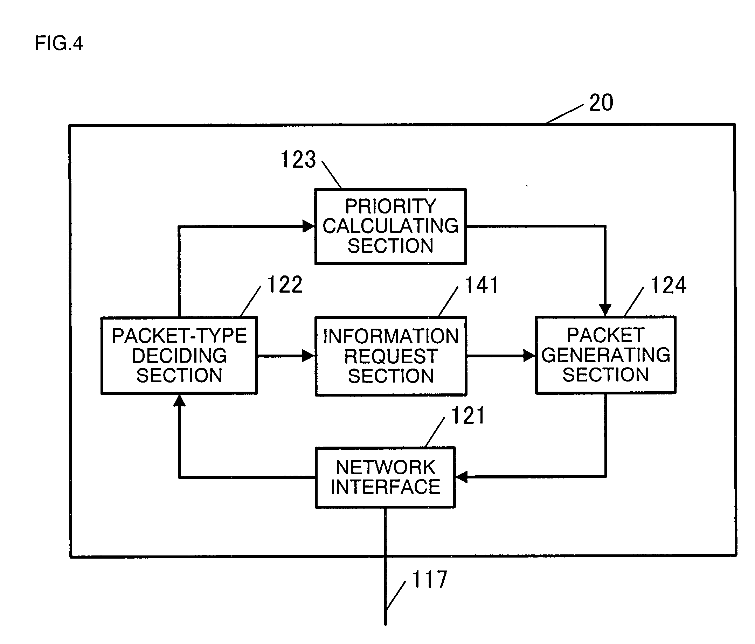

Fig. 4 is a configuration example of the router priority calculation device 20 in embodiment 2 of the invention.

Embodiment 2 of the invention is based on the addition of an information request section 141, for requesting the physical router device to notify router status information, to the router priority calculating device configuration of embodiment 1, wherein the other is the same as embodiment 1.

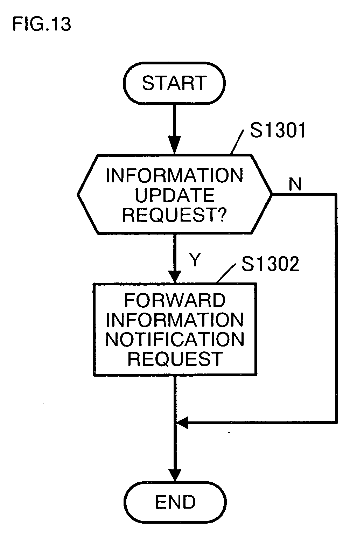

Using Fig. 13, explanation is now made below on the operation of the router priority calculation device 40 in embodiment 2.

Incidentally, the operation in the case the router priority calculation device 20 received a packet at its network interface 121 is the same as that shown in Fig. 12.

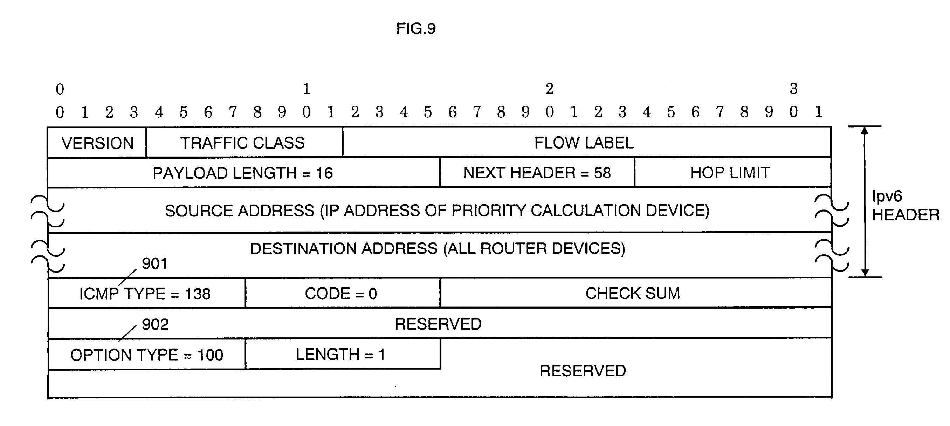

The difference in operation from embodiment 1 lies in that, when an information request section 141 decides to require router-status information about physical router device (step S1301), a packet generating section 124 generates a packet for notifying the physical router devices of an information notification request, thereby multicasting the same onto the local network (step S1302). There is shown in Fig. 9 a format of a message for use in transmitting the information notification message. This message is an extension of a router solicitation message, having an ICMP type 901 of "133". The router solicitation message is newly defined with "100" in its option type 902, representing that the router device which received the message notifies its own status information to the router priority calculation device 20, or transmission source. Incidentally, although the packet exemplified here is a packet as in the third layer of the OSI reference model, it is possible to use a packet as in the second layer thereof.

Meanwhile, the information request section 141 requests an information notification at a regular or constant time interval or as a result of a decision, at a packet-type deciding section 122, on the packet received by the network interface 141, in the case of a decision of as a notification packet requesting for information update from the apparatus connected to the local network 11.

Incidentally, although this embodiment explained the router priority calculation device 20 as an independent device connected to the local area network 11, it can be built in the physical router device 21 or 22 and further in the host 23 - 25.

From the above, according to the present embodiment, priority update is made when the router priority calculation device requires to update the priority or when there is a change in the router-device line status over the local network, or so. Therefore, switchover is feasible between master and backup routers without unnecessarily increasing the traffic over the local network.

(Embodiment 3)

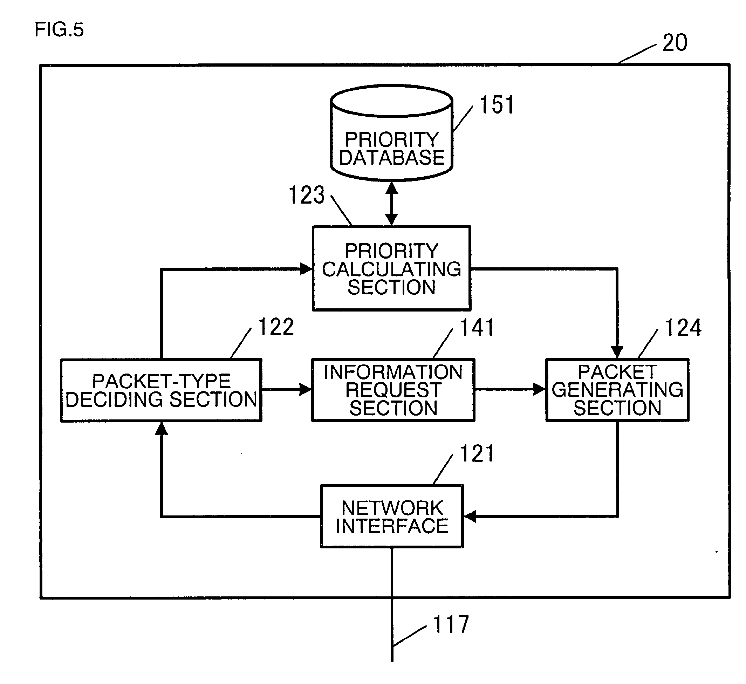

Fig. 5 is a configuration example of the router priority calculation device 20 in embodiment 3 of the invention. This is different from the router priority calculation device configuration of embodiment 2 in that there is added a priority database 151. The priority database 151 records therein the combination of a priority obtained by the priority calculating section 123 and an identifier of physical-router device.

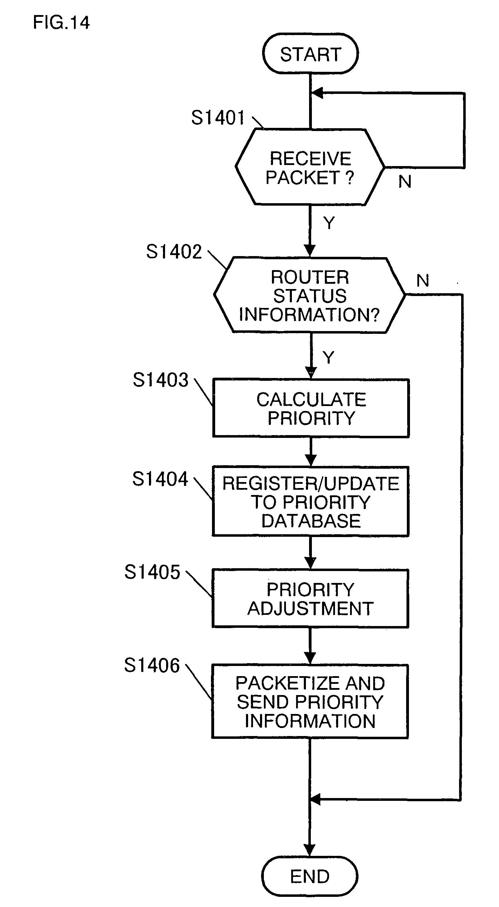

Using Fig. 14, explanation is now made below on the operation of the router priority calculation device 20 of this embodiment.

In the router priority calculation device 20, when the network interface 131 receives a packet (step S1401), the packet-type deciding section 122 decides the type of the packet (step S1402). In the case of a decision that the packet received at the packet-type deciding section 122 is a packet notifying the information about the status of physical router device 21 or 22, the priority calculating section 123 calculates a priority of the physical router 21 or 22, or information transmission source, depending upon the foregoing information (step S1403). Incidentally, how to calculate a priority is similar to embodiment 1.

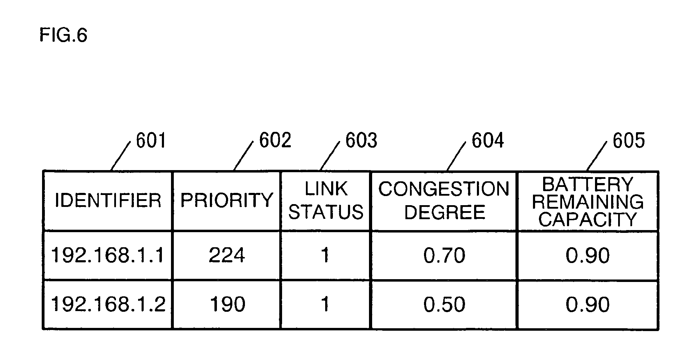

Then, the priority calculating section 123 registers the obtained priority to the priority database 151 (step S1401). There is shown in Fig. 6 an example of registered data in the priority database. In this example, there are two physical router devices wherein Ipv4 (Internet Protocol Version 4) address is used as an identifier 601. However, the number of physical routers is not especially limited. Meanwhile, the identifier may use IPv6 address, network interface 114 MAC address of the physical router device or the like besides the IPv4 address. Meanwhile, besides the identifier 601, there are registered a priority 602, a link status 603, a congestion degree 604 and a battery remaining capacity 605, for each physical router.

Meanwhile, the priority calculating section 123, when registering the calculated priority 602 in the priority database 151, examines the entries already registered. In the case there are those of data having the same identifier, the priority 602 is updated. In the absence thereof, a new entry is prepared for registration. Furthermore, to the priority database 151 is registered the router-status information of a physical router device used in calculating the priority 602 (step S1404).

Then, the priority calculating section 123 compares the obtained priority 602 with the priority 602 of physical router device already stored in the priority database 151. When deciding a physical router device having the same priority 602, priority adjustment is carried out. Namely, in the case of the example in Fig. 6, updated status information is notified from the physical router device having an identifier of 192.168.1.1. When the information has a link status 603 of 1, a congestion degree 604 of 0.60 and a battery remaining capacity 605 of 0.31, a new priority is given 190 from (Equation 1). This results in the same priority as that of the physical router device having an identifier 192.168.1.2.

In this case, following the constants A, B and C in (Equation 1), adjustment is made so as to provide a higher priority to the physical router well in the status as to the significant information. Namely, because the link status that significance is given the most is the same in this case, adjustment is made so as to provide a higher priority to the physical router device having an identifier 192.168.1.1 well in the congestion degree status the next significance is given, than that of the physical router device having an identifier 192.168.1.2.

Meanwhile, when a plurality of physical router devices same in priority are same in every status, priority adjustment is made by selecting a physical router device, whose priority is to be adjusted, by suitable means of random number, the order of identifier decrease or increase, etc.

Incidentally, in priority adjustment, when the physical router device whose priority is currently calculated by the priority calculating section 123 is a physical router device whose priority is to be raised, processing is made to raise the priority of the relevant physical router device. Meanwhile, in the case of providing a higher priority to the physical router device whose priority is stored in the priority database 151 than the physical router device whose priority is currently calculated by the priority calculating section 123, processing is made to lower the priority of physical router device calculated by the priority calculating section 123. In this manner, no adjustment is made for the router-device priority stored in the priority database 151.

Then, the packet generating section 124 packetizes the calculated priority in order for notification to the physical router device 21 or 22, and transmits it to the router device concerned through the network interface 121 (step S1406). Incidentally, the operation of the information request section 141 is the same as that of embodiment 3.

Meanwhile, although the present embodiment explained the router priority calculation device 20 as an independent device connected to the local network 11, it can be incorporated in the physical router device 21 or 22 and further in the host 23 - 25.

According to the above present embodiment, the priority of the router device on a local network can be adjusted occasionally by using a best-suited weighting, flexible switchover is available between master and backup routers.

(Embodiment 4)

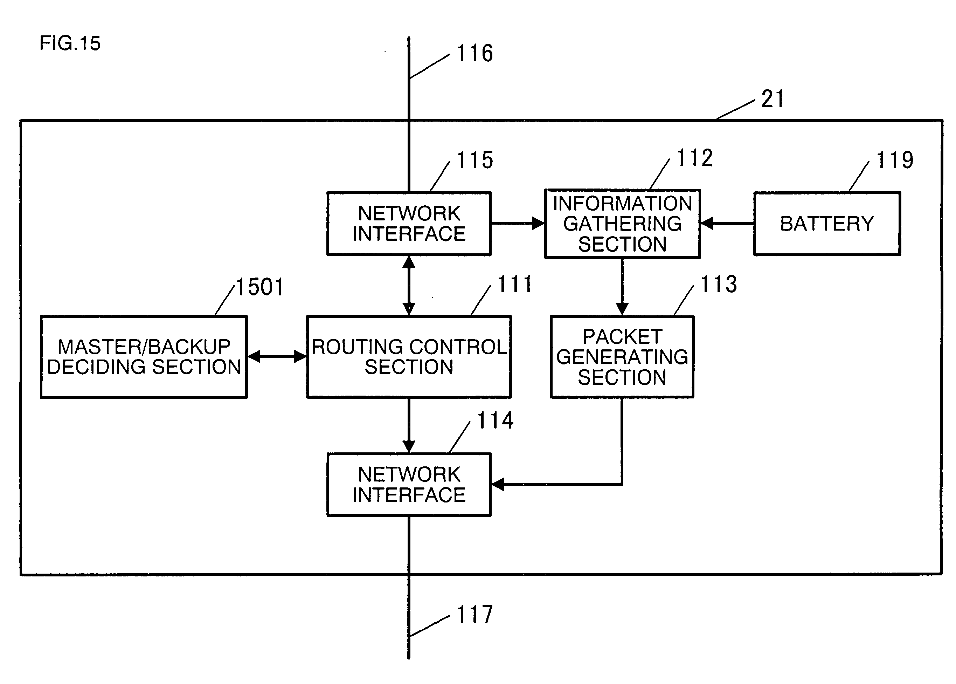

Fig. 15 is a configuration diagram of a physical router device in embodiment 4 of the invention. This is different from embodiment 1 to 3 in that it has a master-backup deciding section 1501. The master-backup deciding section 1501 decides whether the physical router device is to be made in status into a master router or a backup router.

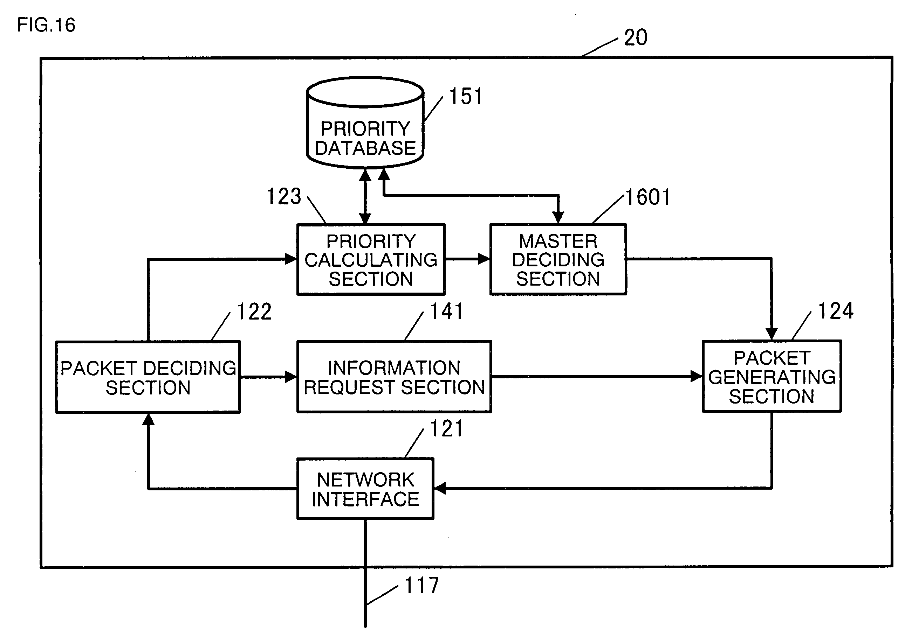

Fig. 16 is a configuration diagram of a router priority calculation device in embodiment 4 of the invention. This is different from embodiment 3 in that it has a master deciding section 1601. The master deciding section 1601 decides a physical router device to operate as a master router, depending upon all the priorities of physical router devices in the priority database 151.

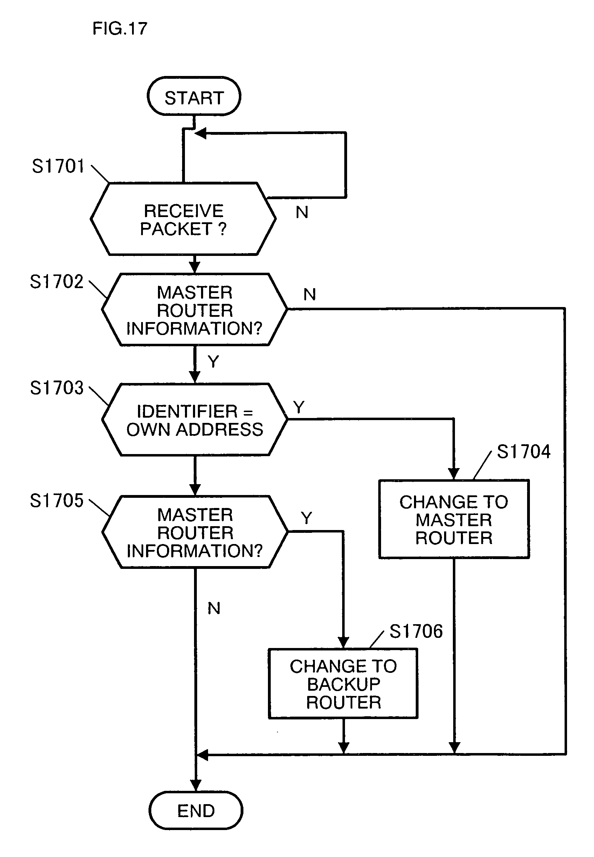

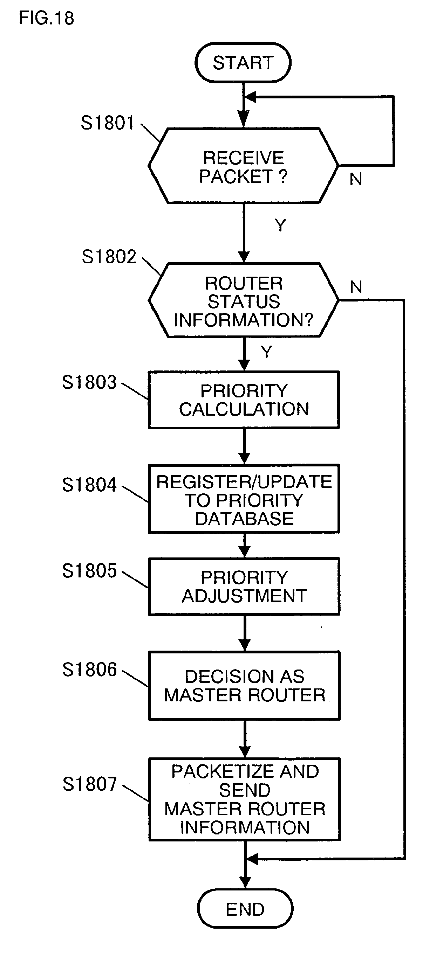

Using Figs. 17 and 18, explanation is now made below on the operation of the physical router device and router priority calculation device of the present embodiment. Incidentally, the process the physical router 21 transmits router-status information and the process the router priority calculation device 20 sends an information update request are the same as embodiment 3.

When the router priority calculation device 20 receives a packet (step S1801), the packet deciding section 122 decides whether or not it is router-status information (step S1802). When it is not router-status information, the process is ended as it is.

Meanwhile, when it is router-status information, the priority calculating section 123 makes a priority calculation (step S1803), a registration/update to the priority database 151 (step S1804) and a priority adjustment (step S1805), similarly to embodiment 3.

Then, the master deciding section 1601 looks up the priority database 151 and decides a physical router device that is to become a master router (step S1806). It further multicasts an identifier 601 of a physical router device that is to become a master router to all the physical routers through the network interface 131 (step S1807).

When the physical router device 21 receives the multicast (step S1701), the packet-type deciding section 122 decides whether or not it is information of master router (step S1702). When not master router information, the process is ended as it is.

Meanwhile, in the case of master router information, the master-backup deciding section 1501 decides whether or not the notified identifier refers to its own device (step S1703). The master-backup deciding section 1501, when referred to its own device, instructs the routing control section 111 for making a shift to a master router whereby the routing control section 111 makes a switch processing (step S1704).

Meanwhile, when not referred to the own device and it is currently a master router (step S1705), a switchover process to a master router is instructed to the routing control section 111 to make a change to a backup router whereby the routing control section 111 makes a switchover operation (step S1706). When currently not a master router, the process is ended as it is without taking any action.

As described above, according to the present embodiment, the router priority calculation device is allowed to unambiguously decide a physical router device that is to become a master router. Therefore, conflictions, etc. can be avoided between the physical router devices, and switchover can be made flexibly between master and backup routers.

INDUSTRIAL APPLICABILITY

As described above, the present invention is useful for a virtual router system that a plurality of physical router devices are to operate virtually as one router device, and suited for a inter-router adjustment method, router priority calculation device and router device which can flexibly change the priorities of the physical router devices for deciding master and backup routers.

**Claims**

1. An inter-router adjustment method comprising:

   an information request step of requesting router status information to all router devices belonging to a same sub-network;
   a step of acquiring the router status information and calculating priorities deciding a router device that is to become an operating status based on the router status information so that the plurality of router devices can operate virtually as one router device; and
   a step of deciding a first router device that is to become an operating status and a second router device to be in a standby status, according to the priorities.

2. An inter-router adjustment method comprising:

   an information request step of requesting router status information to all router devices belonging to a same sub-network;
   a step of acquiring the router status information and calculating priorities for deciding a router device that is to become an operating status based on the router status information so that the plurality of router devices can operate virtually as one router device;
   a step of transmitting the priorities calculated for the router devices respectively to the router devices; and
   a step for a first router device which received the priority to decide whether or not to become an operating status, depending upon the priority of its own and the priority of a second router device received from the second router device being in an operating status.

3.  An inter-router adjustment method according to either claim 1 or claim 2, further including a step of adjusting the priorities between the router devices depending upon a significance of the router status information.

4.  An inter-router adjustment method according to either claim 1 or claim 2, wherein request for the router status information is periodically made based on the information request step.

5.  An inter-router adjustment method according to either claim 1 or claim 2, wherein request for the router status information is made according to a request from a communication device including the router devices connected to the same sub-network.

6.  An inter-router adjustment method according to either claim 1 or claim 2, wherein calculating the priorities is made when there is a change in the router status information acquired.

7.  An inter-router adjustment method according to either claim 1 or claim 2, wherein the router status information is at least any one of a line status, a processing burden and a battery remaining capacity of the router device itself.

8.  A router priority calculation device comprising:

    a router information gathering section for gathering router status information of router devices belonging to a same sub-network;
    a priority calculating section for calculating priorities deciding a router device that is to become an operating status based on the router status information so that a plurality of router devices can operate virtually as one router device; and
    a priority notifying section for notifying the priorities calculated for the router devices respectively to the router devices.

9.  A router priority calculation device comprising:

    a router information gathering section for gathering router status information of the router devices belonging to a same sub-network;
    a priority calculating section for calculating priorities deciding a router device that is to become an operating status based on the router status information so that a plurality of router devices can operate virtually as one router device;
    a master deciding section for deciding a first router device that is to become an operating status and a second router device that is to be in a standby status, according to the priorities; and
    a master notifying section for notifying information identifying the decided router device to the router device.

10. A router priority calculation device according to either claim 8 or claim 9, wherein the router information gathering section has a comparing section for comparing the router status information newly acquired with existing router status information, to instruct the priority calculating section to re-calculate a priority when the comparing section detects a difference in the router status information.

11. A router priority calculation device according to either claim 8 or claim 9, wherein the router information gathering section has an information request section for requesting the router status information to the router device.

12. A router priority calculation device according to claim 11, wherein the router information gathering section has a timer, the information request section requesting the router status information when receiving a time-up notification from the timer.

13. A router priority calculation device according to claim 11, wherein the router information gathering section further includes an update request receiving section for receiving an update request for the priority from a communication device including the router devices connected to the same sub-network,
    the update request receiving section, when receiving the update request, making a notification to the information request section whereby the information request section requests the router status information to the router device.

14. A router priority calculation device according to either claim 8 or claim 9, wherein the router status information is at least any one of a line status, a processing burden and a battery remaining capacity of the router device itself.

15. A router device comprising:

a status notifying section for forwarding router status information comprising at least any one of a line status, a process burden and a battery remaining capacity;
a priority receiving section for receiving a priority deciding a router device that is to become an operating status so that a plurality of router devices belonging to a same sub-network can operate virtually as one router device; and
a master deciding section for deciding whether to become an operating status or a standby status, according to the priority received and a priority notified from a first router device in an operating status.

16. A router device according to claim 15, wherein the status notifying section forwards periodically the router status information onto the sub-network.

17. A router device according to claim 15, further including an information request receiving section for receiving a request for the router status information, to forward the router status information onto the sub-network depending upon the request the status notifying section received.

18. A router device according to claim 15, further including a status monitor section for monitoring a change in the router status information, the status monitor section, when detecting a change in the router status information, making a notification to the information notifying section whereby the information notifying section forwards a latest router status information onto the sub-network.

19. A local network system comprising a router device according to any one of claims 15 to 18, and a router priority calculation device according to any one of claims 8 to 13.


**Amended claims under Art. 19.1 PCT**

1. An inter-router adjustment method comprising:

an information request step of requesting router status information to all router devices belonging to a same sub-network;
a step of acquiring the router status information and calculating priorities deciding a router device that is to become an operating status based on the router status information so that the plurality of router devices can operate virtually as one router device; and
a step of deciding a first router device that is to become an operating status and a second router device to be in a standby status, according to the priorities.

2. An inter-router adjustment method comprising:

an information request step of requesting router status information to all router devices belonging to a same sub-network;
a step of acquiring the router status information and calculating priorities for deciding a router device that is to become an operating status based on the router status information so that the plurality of router devices can operate virtually as one router device;
a step of transmitting the priorities calculated for the router devices respectively to the router devices; and
a step for a first router device which received the priority to decide whether or not to become an operating status, depending upon the priority of its own and the priority of a second router device received from the second router device being in an operating status.

3. An inter-router adjustment method according to either claim 1 or claim 2, further including a step of adjusting the priorities between the router devices depending upon a significance of the router status information.

4. An inter-router adjustment method according to either claim 1 or claim 2, wherein request for the router status information is periodically made based on the information request step.

**5.** An inter-router adjustment method according to either claim 1 or claim 2, wherein request for the router status information is made according to a request from a communication device including the router devices connected to the same sub-network.

**6.** An inter-router adjustment method according to either claim 1 or claim 2, wherein calculating the priorities is made when there is a change in the router status information acquired.

**7.** An inter-router adjustment method according to either claim 1 or claim 2, wherein the router status information is at least any one of a line status, a processing burden and a battery remaining capacity of the router device itself.

**8.** A router priority calculation device comprising:

a router information gathering section for gathering router status information of router devices belonging to a same sub-network;
a priority calculating section for calculating priorities deciding a router device that is to become an operating status based on the router status information so that a plurality of router devices can operate virtually as one router device; and
a priority notifying section for notifying the priorities calculated for the router devices respectively to the router devices.

**9.** A router priority calculation device comprising:

a router information gathering section for gathering router status information of the router devices belonging to a same sub-network;
a priority calculating section for calculating priorities deciding a router device that is to become an operating status based on the router status information so that a plurality of router devices can operate virtually as one router device;
a master deciding section for deciding a first router device that is to become an operating status and a second router device that is to be in a standby status, according to the priorities; and
a master notifying section for notifying information identifying the decided router device to the router device.

**10.** A router priority calculation device according to either claim 8 or claim 9, wherein the router information gathering section has a comparing section for comparing the router status information newly acquired with existing router status information, to instruct the priority calculating section to re-calculate a priority when the comparing section detects a difference in the router status information.

**11.** A router priority calculation device according to either claim 8 or claim 9, wherein the router information gathering section has an information request section for requesting the router status information to the router device.

**12.** A router priority calculation device according to claim 11, wherein the router information gathering section has a timer, the information request section requesting the router status information when receiving a time-up notification from the timer.

**13.** A router priority calculation device according to claim 11, wherein the router information gathering section further includes an update request receiving section for receiving an update request for the priority from a communication device including the router devices connected to the same sub-network, the update request receiving section, when receiving the update request, making a notification to the information request section whereby the information request section requests the router status information to the router device.

**14.** A router priority calculation device according to either claim 8 or claim 9, wherein the router status information is at least any one of a line status, a processing burden and a battery remaining capacity of the router device itself.

**15.** A router device comprising:

a status notifying section for forwarding router status information comprising at least any one of a line status, a process burden and a battery remaining capacity;
a priority receiving section for receiving a priority deciding a router device that is to become an operating status so that a plurality of router devices belonging to a same sub-network can operate virtually as one router device; and

a master deciding section for deciding whether to become an operating status or a standby status, according to the priority received and a priority notified from a first router device in an operating status.

**16.** A router device according to claim 15, wherein the status notifying section forwards periodically the router status information onto the sub-network.

**17.** A router device according to claim 15, further including an information request receiving section for receiving a request for the router status information, to forward the router status information onto the sub-network depending upon the request the status notifying section received.

**18.** A router device according to claim 15, further including a status monitor section for monitoring a change in the router status information, the status monitor section, when detecting a change in the router status information, making a notification to the information notifying section whereby the information notifying section forwards a latest router status information onto the sub-network.

**19.** A local network system comprising

a router device that is comprised with

a status notifying section for forwarding router status information comprising at least any one of a line status, a process burden and a battery remaining capacity;

a priority receiving section for receiving a priority deciding a router device that is to become an operating status so that a plurality of router devices belonging to a same sub-network can operate virtually as one router device; and

a master deciding section for deciding whether to become an operating status or a standby status, according to the priority received and a priority notified from a first router device in an operating status, and

a router priority calculation device that is comprised with

a router information gathering section for gathering router status information of router devices belonging to a same sub-network;

a priority calculating section for calculating priorities deciding a router device that is to become an operating status based on the router status information so that a plurality of router devices can operate virtually as one router device; and

a priority notifying section for notifying the priorities calculated for the router devices respectively to the router devices.

FIG.1

EP 1 594 266 A1

FIG.2

FIG.3

20

123
PRIORITY
CALCULATING
SECTION

124
PACKET
GENERATING
SECTION

122
PACKET-TYPE
DECIDING
SECTION

121
NETWORK
INTERFACE

117

EP 1 594 266 A1

FIG.4

EP 1 594 266 A1

FIG.5

FIG.6

| IDENTIFIER | PRIORITY | LINK STATUS | CONGESTION DEGREE | BATTERY REMAINING CAPACITY |
|---|---|---|---|---|
| 192.168.1.1 | 224 | 1 | 0.70 | 0.90 |
| 192.168.1.2 | 190 | 1 | 0.50 | 0.90 |

601 602 603 604 605

FIG.7

ROUTER PRIORITY
CALCULATION DEVICE
20

PHYSICAL ROUTER
DEVICE
21

PHYSICAL ROUTER
DEVICE
22

S71

S71

S72

S72

S73

```
ROUTER PRIORITY
CALCULATION
```

S74

S74

S75

```
OPERATE AS MASTER
ROUTER ACCORDING
TO PRIORITY
```

S76

```
OPERATE AS BACKUP
ROUTER ACCORDING
TO PRIORITY
```

FIG.8

| 0 | | | | | | | | | 1 | | | | | | | | | 2 | | | | | | | | | 3 | |
|---|---|---|---|---|---|---|---|---|---|---|---|---|---|---|---|---|---|---|---|---|---|---|---|---|---|---|---|
| 0 1 2 3 4 5 6 7 8 9 | | | | | | | | | 0 1 2 3 4 5 6 7 8 9 | | | | | | | | | 0 1 2 3 4 5 6 7 8 9 | | | | | | | | | 0 1 | |

IPv6 HEADER

| VERSION | TRAFFIC CLASS | FLOW LABEL |
|---|---|---|
| PAYLOAD LENGTH = 40 | NEXT HEADER = 58 | HOP LIMIT |
| SOURCE ADDRESS (IP ADDRESS OF PHYSICAL ROUTER DEVICE) | | |
| DESTINATION ADDRESS (IP ADDRESS OF PRIORITY CALCULATION DEVICE) | | |

| ICMP TYPE = 134 | CODE = 0 | CHECK SUM |
|---|---|---|
| CURE-HOP LIMIT | M O H RESERVED | ROUTER LIFETIME |
| REACH TIME | | |
| RE-TRANSFER TIMER | | |

STATUS INFORMATION

| OPTION TYPE = 101 | LENGTH = 1 | CONNECTION STATUS |
|---|---|---|
| RESERVED | | |

STATUS INFORMATION

| OPTION TYPE = 103 | LENGTH = 1 | RESERVED |
|---|---|---|
| PACKET TOTAL COUNT | | NORMAL PACKET COUNT |

STATUS INFORMATION

| OPTION TYPE = 106 | LENGTH = 1 | BATTERY REMAINING CAPACITY |
|---|---|---|
| RESERVED | | |

801  802  803  804  805

EP 1 594 266 A1

22

FIG.9

| | | | |
|---|---|---|---|
| 0 | 1 | 2 | 3 |
| 0 1 2 3 4 5 6 7 8 9 0 1 | 2 3 4 5 6 | 7 8 9 0 1 2 3 4 5 | 6 7 8 9 0 1 |

| | | | |
|---|---|---|---|
| VERSION | TRAFFIC CLASS | FLOW LABEL | |
| PAYLOAD LENGTH = 16 | | NEXT HEADER = 58 | HOP LIMIT |
| SOURCE ADDRESS (IP ADDRESS OF PRIORITY CALCULATION DEVICE) | | | |
| DESTINATION ADDRESS (ALL ROUTER DEVICES) | | | |
| ICMP TYPE = 138 | CODE = 0 | CHECK SUM | |
| RESERVED | | | |
| OPTION TYPE = 100 | LENGTH = 1 | RESERVED | |

901

902

Ipv6 HEADER

EP 1 594 266 A1

FIG.10

| VERSION | TRAFFIC CLASS | FLOW LABEL | |
|---|---|---|---|
| PAYLOAD LENGTH = 8 | | NEXT HEADER = 58 | HOP LIMIT |
| SOURCE ADDRESS (IP ADDRESS OF PRIORITY CALCULATION DEVICE) | | | |
| DESTINATION ADDRESS (IP ADDDRESS OF PHYSICAL ROUTER DEVICE TO SET PRIORITY) | | | |
| ICMP TYPE = 138 | CODE = 0 | CHECK SUM | |
| PRIORITY (= PRIORITY CALCULATED) | | RESERVED | |

0   1   2   3
0 1 2 3 4 5 6 7 8 9 0 1 2 3 4 5 6 7 8 9 0 1 2 3 4 5 6 7 8 9 0 1

Ipv6 HEADER

101
102

EP 1 594 266 A1

FIG.11A

FIG.11B

START

GATHER STATUS INFORMATION — S1101

PACKETIZE INFORMATION — S1102

FORWARD ROUTER STATUS INFORMATION — S1103

END

---

START

PACKET TYPE = PRIORITY INFORMATION — S1104

Y

N

SET/UPDATE PRIORITY IN MANAGEMENT TABLE — S1105

PRIORITY OF OWN ROUTER > PRIORITY OF OTHER ROUTER — S1106

Y

N

CHANGE TO MASTER ROUTER — S1107

CHANGE TO BACKUP ROUTER — S1108

END

FIG.12

```
                    ┌─────────┐
                    │  START  │
                    └─────────┘
                         │
                         │ ◄─────────────┐
                         ▼               │
S1201 ─────         ╱◇╲                  │
                  ╱     ╲                │
                 ◇ RECEIVE ◇  N          │
                 ◇ PACKET ? ◇ ───────────┘
                  ╲       ╱
                    ╲◇╱
                      │ Y
                      ▼
S1202 ─────    ⬡ ROUTER ⬡  N
               ⬡ STATUS  ⬡ ───────┐
               ⬡INFORMATION?⬡      │
                      │ Y          │
                      ▼            │
S1203 ─────  ┌──────────────┐      │
             │  CALCULATE   │      │
             │  PRIORITY    │      │
             └──────────────┘      │
                      │            │
                      ▼            │
S1204 ─────  ┌──────────────┐      │
             │ PACKETIZE AND│      │
             │  TRANSMIT    │      │
             └──────────────┘      │
                      │            │
                      ▼ ◄──────────┘
                 ┌─────────┐
                 │   END   │
                 └─────────┘
```

FIG.13

```
              ┌─────────────┐
              │    START    │
              └─────────────┘
                     │
                     ▼        ╱ S1301
            ╱─────────────────╲
           ╱   INFORMATION     ╲      N
          ⟨      UPDATE         ⟩──────┐
           ╲    REQUEST?       ╱       │
            ╲─────────────────╱        │
                     │  Y   ╱ S1302    │
                     ▼                 │
            ┌─────────────────┐        │
            │    FORWARD      │        │
            │  INFORMATION    │        │
            │  NOTIFICATION   │        │
            │    REQUEST      │        │
            └─────────────────┘        │
                     │                 │
                     ◄─────────────────┘
                     ▼
              ┌─────────────┐
              │     END     │
              └─────────────┘
```

FIG.14

```
                    ┌─────────┐
                    │  START  │
                    └────┬────┘
                         │ ◄──────────────────┐
                         ▼                     │
         S1401      ╱─────────────╲            │
                   ╱   RECEIVE      ╲───────────┘
                   ╲   PACKET ?     ╱    N
                    ╲──────┬───────╱
                           │ Y
                           ▼
         S1402    ╱──────────────────╲      N
                 ╱     ROUTER          ╲──────────┐
                 ╲     STATUS          ╱          │
                  ╲  INFORMATION?     ╱           │
                   ╲────────┬────────╱            │
                            │ Y                   │
                            ▼                     │
         S1403    ┌──────────────────┐            │
                  │    CALCULATE      │            │
                  │    PRIORITY       │            │
                  └────────┬─────────┘            │
                           ▼                      │
         S1404    ┌──────────────────┐            │
                  │ REGISTER/UPDATE   │            │
                  │  TO PRIORITY      │            │
                  │  DATABASE         │            │
                  └────────┬─────────┘            │
                           ▼                      │
         S1405    ┌──────────────────┐            │
                  │    PRIORITY       │            │
                  │    ADJUSTMENT     │            │
                  └────────┬─────────┘            │
                           ▼                      │
         S1406    ┌──────────────────┐            │
                  │  PACKETIZE AND    │            │
                  │  SEND PRIORITY    │            │
                  │  INFORMATION      │            │
                  └────────┬─────────┘            │
                           │ ◄───────────────────┘
                           ▼
                    ┌─────────┐
                    │   END   │
                    └─────────┘
```

FIG.15

21

119 — BATTERY

112 — INFORMATION GATHERING SECTION

113 — PACKET GENERATING SECTION

116

115 — NETWORK INTERFACE

111 — ROUTING CONTROL SECTION

114 — NETWORK INTERFACE

117

1501 — MASTER/BACKUP DECIDING SECTION

FIG.16

**151** PRIORITY DATABASE

**123** PRIORITY CALCULATING SECTION

**1601** MASTER DECIDING SECTION

**122** PACKET DECIDING SECTION

**141** INFORMATION REQUEST SECTION

**124** PACKET GENERATING SECTION

**121** NETWORK INTERFACE

**117**

**20**

EP 1 594 266 A1

FIG.17

```
                        ┌─────────┐
                        │  START  │
                        └────┬────┘
                             │
                             ▼
                        ┌──────────┐◄──────────┐
S1701 ─┐                │ RECEIVE  │           │
       │                │ PACKET ? │─── N ─────┘
                        └────┬─────┘
                             │
                             ▼
S1702 ─┐              ┌────────────┐
       │              │   MASTER   │
                      │   ROUTER   │──── N ──────────────────────┐
                      │INFORMATION?│                             │
                      └─────┬──────┘                             │
                            │ Y                                  │
                            ▼                                    │
S1703 ─┐             ┌────────────┐                              │
       │             │ IDENTIFIER=│──── Y ──────┐                │
                     │OWN ADDRESS │             │                │
                     └─────┬──────┘             ▼                │
                           │ Y          S1704 ─┐                 │
                           ▼                   ┌────────────┐    │
S1705 ─┐            ┌────────────┐             │ CHANGE TO  │    │
       │            │   MASTER   │             │   MASTER   │    │
                    │   ROUTER   │── Y ──┐     │   ROUTER   │    │
                    │INFORMATION?│       │     └─────┬──────┘    │
                    └─────┬──────┘       ▼           │           │
                          │ N     S1706 ─┐           │           │
                          │             ┌────────────┐           │
                          │             │ CHANGE TO  │           │
                          │             │   BACKUP   │           │
                          │             │   ROUTER   │           │
                          │             └─────┬──────┘           │
                          │                   │                  │
                          │◄──────────────────┴──────────────────┘
                          ▼
                     ┌─────────┐
                     │   END   │
                     └─────────┘
```

FIG.18

```
                    ┌──────────┐
                    │  START   │
                    └──────────┘
                          │←─────────────┐
                          ↓              │
S1801          ╱──────────────────╲      │
              ╱    RECEIVE          ╲     │
              ╲    PACKET ?         ╱──N──┘
               ╲──────────────────╱
                          │
                          Y
                          ↓
S1802          ╱──────────────────╲
              ╱    ROUTER           ╲
              ╱    STATUS            ╲────N────┐
              ╲    INFORMATION?     ╱          │
               ╲──────────────────╱           │
                          │                    │
                          Y                    │
                          ↓                    │
S1803          ┌──────────────────┐            │
               │    PRIORITY       │            │
               │  CALCULATION      │            │
               └──────────────────┘            │
                          ↓                    │
S1804          ┌──────────────────┐            │
               │ REGISTER/UPDATE   │            │
               │ TO PRIORITY       │            │
               │ DATABASE          │            │
               └──────────────────┘            │
                          ↓                    │
S1805          ┌──────────────────┐            │
               │    PRIORITY       │            │
               │  ADJUSTMENT       │            │
               └──────────────────┘            │
                          ↓                    │
S1806          ┌──────────────────┐            │
               │   DECISION AS     │            │
               │ MASTER ROUTER     │            │
               └──────────────────┘            │
                          ↓                    │
S1807          ┌──────────────────┐            │
               │ PACKETIZE AND     │            │
               │ SEND              │            │
               │ MASTER ROUTER     │            │
               │ INFORMATION       │            │
               └──────────────────┘            │
                          ↓←──────────────────┘
                    ┌──────────┐
                    │   END    │
                    └──────────┘
```

FIG.19

ROUTER DEVICE
(MASTER ROUTER) /1001

ROUTER DEVICE
(BACKUP ROUTER) /1002

1006

HOST NODE /1003

HOST NODE /1004

HOST NODE /1005

EP 1 594 266 A1

33

LIST OF DRAWING REFERENCES

11 LOCAL NETWORK

12, 13 EXTERNAL NETWORK

20 ROUTER PRIORITY CALCULATION DEVICE

21, 22 PHYSICAL ROUTER DEVICE

23, 24, 25 HOST

111 ROUTING CONTROL SECTION

112 INFORMATION GATHERING SECTION

113, 124 PACKET GENERATING SECTION

114, 115, 121, 131, 141 NETWORK INTERFACE

116 EXTERNAL NETWORK

117 LOCAL NETWORK

118 MANAGEMENT FUNCTION TABLE

122 PACKET TYPE DECIDING SECTION

123 PRIORITY CALCULATING SECTION

141 INFORMATION REQUEST SECTION

151 ROUTER PRIORITY DATABASE

1501 MASTER-BACKUP DECIDING SECTION

1601 MASTER DECIDING SECTION

**INTERNATIONAL SEARCH REPORT**

| International application No. |
| --- |
| PCT/JP2004/001906 |

**A. CLASSIFICATION OF SUBJECT MATTER**
Int.Cl⁷ H04L12/56

According to International Patent Classification (IPC) or to both national classification and IPC

**B. FIELDS SEARCHED**

Minimum documentation searched (classification system followed by classification symbols)
Int.Cl⁷ H04L12/56, H04L12/46

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2003-46539 A  (NEC Corp.),<br>14 February, 2003 (14.02.03),<br>Par. Nos. [0049] to [0064], [0081] to [0085];<br>Fig. 2 | 1-8,10-19<br>9 |

| ☐ Further documents are listed in the continuation of Box C. | ☐ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>21 May, 2004 (21.05.04) | Date of mailing of the international search report<br>08 June, 2004 (08.06.04) |
| --- | --- |
| Name and mailing address of the ISA/<br>    Japanese Patent Office | Authorized officer |
| Facsimile No. | Telephone No. |

Form PCT/ISA/210 (second sheet) (January 2004)